# EUROPEAN PATENT SPECIFICATION

(11) **EP 2 639 273 B1**
(45) Date of publication and mention of the grant of the patent: **04.03.2015**
(21) Application number: 13158617.4
(22) Date of filing: 11.03.2013
(51) Int. Cl.: C09D 183/04, C08L 83/04

(54) **Silicone Rubber Composition**
Silikongummizusammensetzung
Composition de caoutchouc en silicone

(30) Priority: 13.03.2012 JP 2012055297
(43) Date of publication of application: 18.09.2013
(73) Proprietor: Shin-Etsu Chemical Co., Ltd., Tokyo (JP)
(72) Inventor: Mayumi, Yuka, Annaka-shi, Gunma (JP); Igarashi, Minoru, Annaka-shi, Gunma (JP); Kimura, Tsuneo, Annaka-shi, Gunma (JP)
(74) Representative: Ter Meer Steinmeister & Partner

(56) References cited:
- EP-A1- 1 958 988
- US-A- 4 587 136
- US-A1- 2006 276 585

## Description

### TECHNICAL FIELD

This invention relates to a silicone rubber composition from which a silicon rubber having a low coefficient of surface friction is obtainable via addition crosslinking.

### BACKGROUND ART

Silicone rubbers are used as molded rubber parts in various fields of application by taking advantage of their heat resistance, freeze resistance, and electrical properties. Among others, addition reaction-curable silicone rubber compositions are widely used as the molding material for infant goods such as toys, tableware, toothbrushes, bottle teats, and baby dummies, swimming and diving gears such as goggles and snorkels, and automobile parts because these compositions do not form by-products as found in organic peroxide-curable compositions due to organic peroxide decomposition and because of safety, good appearance, transparency, touch and durability.

One known method of reducing the surface friction of silicone rubber is the addition of a less compatible oil. In case the silicone rubber is dimethylsilicone, for example, a low viscosity oil having phenyl radicals is added thereto prior to molding into a sheet. The less compatible phenyl oil bleeds out of the sheet and spreads on the surface so that the sheet may have a low coefficient of surface friction. These materials are widely used as the oil-bleeding material for automobiles (see WO 2006/070947 and JP-A 2009-185254). These oil-bleeding materials, however, have the problem that the oil component bleeding over the surface may migrate to other materials and cause contamination. It is rather prohibited from the hygiene aspect to use phenyl oil in the teat or nursing application. There is thus a need for a material which is free of any bleeding oil and has a low coefficient of surface friction. Means for providing a slippery surface without adding phenyl oil is known, for example, from JP 4755660 that proposes addition of an alkenyl-free polymer.

### Citation List

Patent Document 1: WO 2006/070947
Patent Document 2: JP-A 2009-185254
Patent Document 3: JP 4755660 (EP 1958988)

### DISCLOSURE OF INVENTION

An object of the invention is to provide an addition-curable silicone rubber composition which is free of a less compatible, low viscosity polymer and is cured into a silicone rubber having a low coefficient of surface friction.

The inventors have found that a silicone rubber composition which affords a silicone rubber having a low coefficient of surface friction is obtained when an alkenyl-containing organopolysiloxane which is commonly used as the base polymer in silicone rubber compositions is combined with a cyclohexenylalkyl-containing organopolysiloxane having a high degree of polymerization which is gum-like at room temperature, in a specific ratio.

The invention provides an addition-curable silicone rubber composition comprising:
(A) 100 parts by weight of a cyclohexenylalkyl-free organopolysiloxane having at least two silicon-bonded alkenyl radicals each terminated with an unsaturated double bond: CH₂=CH- per molecule, represented by the average compositional formula (I):

   R¹ₐSiO_{(4-a)/2} (I)

   wherein R¹ is each independently a substituted or unsubstituted monovalent hydrocarbon radical of 1 to 10 carbon atoms, and a is a positive number of 1.5 to 2.8,
(B) 1 to 50 parts by weight of an organopolysiloxane containing at least one silicon-bonded cyclohexenylalkyl radical per molecule and having an average degree of polymerization of at least 1,000,
(C) an organohydrogenpolysiloxane having at least two silicon-bonded hydrogen atoms per molecule, in an amount of 0.2 to 20 parts by weight per 100 parts by weight of components (A) and (B) combined,
(D) reinforcing silica having a specific surface area of at least 50 m²/g as measured by the BET method, in an amount of 10 to 100 parts by weight per 100 parts by weight of components (A) and (B) combined, and
(E) a catalytic amount of an addition reaction catalyst.

Typically, the composition has a viscosity of 50 to 5,000 Pa-s at 25°C and is used in liquid injection molding.

### ADVANTAGEOUS EFFECTS OF INVENTION

The silicone rubber composition is addition crosslinked into a silicon rubber having a low coefficient of surface friction. The problem of oil bleeding is overcome.

### DESCRIPTION OF EMBODIMENTS

According to the invention, a silicone rubber having excellent slipperiness is obtainable by combining specific amounts of components (A) to (E). Specifically, (A) a cyclohexenylalkyl-free organopolysiloxane having silicon-bonded alkenyl radicals each terminated with an unsaturated double bond represented by CH₂=CH- per molecule and (B) an organopolysiloxane having cyclohexenylalkyl (e.g., cyclohexenylethyl, and preferably in the form of cyclohexenylalkyldiorganosiloxy at the end of molecular chain), which is typically gum-like, are combined in a specific ratio to form a silicone elastomer having excellent slipperiness. This eliminates a need for low-viscosity silicone oil that bleeds out to form an oily film on the silicone surface.

Component (A) is a cyclohexenylalkyl-free organopolysiloxane having on average at least two silicon-bonded alkenyl radicals each terminated with an unsaturated double bond represented by CH₂=CH- per molecule. It has the average compositional formula (I).

R¹ₐSiO_{(4-a)/2} (I)

Herein R¹ is each independently a substituted or unsubstituted monovalent hydrocarbon radical of 1 to 10 carbon atoms, preferably 1 to 8 carbon atoms, and "a" is a positive number in the range of 1.5 to 2.8, preferably 1.8 to 2.5, and more preferably 1.95 to 2.05.

Examples of the substituted or unsubstituted monovalent hydrocarbon radical (attached to silicon atom) represented by R¹ include alkyl radicals such as methyl, ethyl, propyl, isopropyl, butyl, isobutyl, tert-butyl, pentyl, neopentyl, hexyl, cyclohexyl, octyl, nonyl and decyl, aryl radicals such as phenyl, tolyl, xylyl and naphthyl, aralkyl radicals such as benzyl, phenylethyl and phenylpropyl, alkenyl radicals terminated with an unsaturated double bond: CH₂=CH- (sometimes simply referred to as alkenyl, hereinafter) such as vinyl, allyl, propenyl, isopropenyl, butenyl, hexenyl and octenyl, and substituted forms of the foregoing in which some or all hydrogen atoms are substituted by halogen atoms (e.g., fluorine, bromine and chlorine), cyano or the like, such as chloromethyl, chloropropyl, bromoethyl, trifloropropyl, and cyanoethyl. It is preferred that at least 90% of R¹ radicals be methyl.

At least two of R¹ radicals must be alkenyl radicals terminated with an unsaturated double bond: CH₂=CH-, preferably having 2 to 8 carbon atoms, more preferably 2 to 6 carbon atoms. Inter alia, vinyl is most preferred.

In the organopolysiloxane (A), the content of alkenyl radicals is preferably 1.0×10⁻⁶ mol/g to 5.0×10⁻⁴ mol/g, more preferably 1.0×10⁻⁵ mol/g to 2.0×10⁻⁴ mol/g. An organopolysiloxane containing less than 1.0×10⁻⁶ mol/g of alkenyl may have too low a rubber hardness and become gel-like. An alkenyl content in excess of 5.0×10⁻⁴ mol/g may cause too high a crosslinking density, resulting in brittle rubber having a high hardness. The alkenyl radical may be attached to the silicon atom at the end of the molecular chain (i.e., the silicon atom of triorganosiloxy at the terminal of the molecular chain) and/or a silicon atom midway the molecular chain (i.e., as side chain substituent on a silicon atom in diorganosiloxane unit at a non-terminal position of the molecular chain).

Component (A) essentially differs from component (B) in that component (B) must contain a silicon-bonded cyclohexenylalkyl radical in the molecule whereas component (A) does not contain cyclohexenylalkyl as the alkenyl radical.

The organopolysiloxane (A) basically has a linear structure capped at either end of the molecular chain with a triorganosiloxy radical ((R¹)₃SiO_{1/2} wherein R¹ is as defined above) and constructed of repeating diorganosiloxane units ((R¹)₂SiO_{2/2}) as the backbone although it may have a partial branched or cyclic structure. The organopolysiloxane usually has a molecular weight corresponding to an average degree of polymerization (i.e., weight average degree of polymerization) of up to 1,500 (specifically, 100 to 1,500), preferably about 150 to about 1,000, and more preferably about 150 to about 600, and is desirably a self-flowing liquid at room temperature (25°C±10°C). A degree of polymerization of less than 100 may fail to achieve adequate rubber texture whereas an organopolysiloxane having a degree of polymerization in excess of 1, 500 may have too high a viscosity to mold.

The molecular weight (or degree of polymerization) may be measured as weight average molecular weight (or weight average degree of polymerization) by gel permeation chromatography versus polystyrene standards using toluene as developing solvent.

Component (B) is an organopolysiloxane containing at least one silicon-bonded cyclohexenylalkyl radical in a molecule, typically having an average degree of polymerization of 1,000 or higher, preferably 2,000 or higher, which is gum-like (i.e., a non-self-flowing non-liquid) at room temperature (25° C±10° C). Preferably it has the average compositional formula (II).

R²_{b}SiO_{(4-b)/2} (II)

Herein R² is each independently a substituted or unsubstituted monovalent hydrocarbon radical of 1 to 10 carbon atoms, preferably 1 to 8 carbon atoms, and b is a positive number in the range of 1.8 to 2.5, preferably 1.9 to 2.1, and more preferably 1.98 to 2.01.

The substituted or unsubstituted monovalent hydrocarbon radical (attached to silicon atom) represented by R² is as exemplified for R¹. Examples include alkyl radicals such as methyl, ethyl, propyl, isopropyl, butyl, isobutyl, tert-butyl, pentyl, neopentyl, hexyl, cyclohexyl, octyl, nonyl and decyl, aryl radicals such as phenyl, tolyl, xylyl and naphthyl, aralkyl radicals such as benzyl, phenylethyl and phenylpropyl, alkenyl radicals (including silicon-bonded alkenyl radicals terminated with an unsaturated double bond: CH₂=CH-) such as vinyl, allyl, propenyl, isopropenyl, butenyl, hexenyl, cyclohexenyl, octenyl and cyclohexenylethyl, and substituted forms of the foregoing in which some or all hydrogen atoms are substituted by halogen atoms (e.g., fluorine, bromine and chlorine), cyano or the like, such as chloromethyl, chloropropyl, bromoethyl, trifloropropyl, and cyanoethyl. Of all R² radicals, at least 1 , preferably 1 to 10 and more preferably 2 to 5 radicals must be cyclohexenylalkyl radicals such as cyclohexenylethyl and cyclohexenylpropyl. Herein, the cyclohexenyl moiety may be either 2,3- or 3,4-cyclohexenyl or both. The alkyl radicals to be substituted with cyclohexenyl are preferably alkyl radicals of 2 to 4 carbon atoms, preferably 2 or 3 carbon atoms such as ethyl and propyl.

In the organopolysiloxane (B), the content of cyclohexenylalkyl is preferably 1.0x10⁻⁷ mol/g to 5.0x10⁻⁴ mol/g, more preferably 1.0x10⁻⁶ mol/g to 2.0x10⁻⁴ mol/g. With too low a cyclohexenylalkyl content, a cured rubber having a low coefficient of surface friction may not be obtained. Too high a cyclohexenylalkyl content may lead to poor rubber properties.

The cyclohexenylalkyl may be attached to the silicon atom at the end of the molecular chain (i.e., the silicon atom of triorganosiloxy at the terminal of the molecular chain) and/or a silicon atom midway the molecular chain (i.e., as side chain substituent on a silicon atom in diorganosiloxane unit at a non-terminal position of the molecular chain).

In addition to the cyclohexenylalkyl, the organopolysiloxane (B) may or may not contain an alkenyl radical (for example, alkenyl radical terminated with an unsaturated double bond: CH₂=CH- as in component (A)). It is preferred from the aspect of low surface friction that component (B) contain no alkenyl radical other than cyclohexenylalkyl.

Like component (A), the organopolysiloxane (B) basically has a linear structure capped at either end of the molecular chain with a triorganosiloxy radical ((R²)₃SiO_{1/2}) and constructed of repeating diorganosiloxane units ((R²)₂SiO_{2/2}) as the backbone although it may have a partial branched or cyclic structure. The cyclohexenylalkyl radical may be attached to the silicon atom at the end of the molecular chain and/or a silicon atom midway the molecular chain. It is desired that at least one cyclohexenylalkyl radical attached to the silicon atom at the end of the molecular chain be included. Specifically, the organopolysiloxane has a linear structure wherein at least one, preferably both of triorganosiloxy radicals ((R²)₃SiO_{1/2}) at opposite ends of the molecular chain is a cyclohexenylalkyldiorganosiloxy radical such as cyclohexenylethyldimethylsiloxy and the backbone consists of repeating diorganosiloxane units ((R²)₂SiO_{2/2}) although it may be partially branched or cyclic. The organopolysiloxane has a molecular weight corresponding to an average degree of polymerization of at least 1,000 and is gum-like, with the average degree of polymerization being preferably at least 2,000 (specifically 2,000 to about 50,000), and more preferably at least 3,000 (specifically 3,000 to about 20,000). An average degree of polymerization of less than 1,000 may fail to achieve adequate rubber texture, resulting in a tacky or greasy surface.

The cyclohexenylalkyl-containing gum-like organopolysiloxane (B) is used in an amount of 1 to 50 parts, preferably 2 to 20 parts by weight per 100 parts by weight of component (A). A composition containing 100 parts by weight of component (A) and less than 1 part by weight of component (B) may not have a low coefficient of surface friction as desired whereas a composition containing 100 parts by weight of component (A) and more than 50 parts by weight of component (B) may have too high a viscosity to mold.

Component (C) is an organohydrogenpolysiloxane having at least two, preferably at least 3 silicon-bonded hydrogen atoms (or SiH radicals) in a molecule. Component (C) serves as a curing agent or crosslinker for curing the composition through the mechanism that hydrosilylation or addition reaction takes place between SiH radicals in its molecule and silicon-bonded alkenyl radicals terminated with an unsaturated double bond: CH₂=CH- in component (A) (and optionally component (B)) to induce crosslinking. It is noted that in general, the SiH radical does not undergo hydrosilylation or addition reaction to the cyclohexenylalkyl radical, typically cyclohexenylethyl in component (B).

Preferred as component (C) is an organohydrogenpolysiloxane having at least two, preferably at least 3, more preferably 3 to 100, and most preferably 3 to 50 silicon-bonded hydrogen atoms (i.e., SiH radicals) in a molecule, represented by the average compositional formula (III).

R³_{c}H_{d}SiO_{(4-c-d)/2} (III)

Herein R³ is a substituted or unsubstituted monovalent hydrocarbon radical of 1 to 10 carbon atoms, c is a positive number of 0.7 to 2.1, d is a positive number of 0.001 to 1.0, and the sum of c+d is 0.8 to 3.0.

The monovalent hydrocarbon radical represented by R³ is as exemplified above for R¹, but it is preferably free of aliphatic unsaturation such as alkenyl. Preferably c is 0.8 to 2.0, d is 0.01 to 1.0, and c+d is 1.0 to 2.5. The molecular structure of the organohydrogenpolysiloxane may be linear, cyclic, branched or three-dimensional network. More preferred is an organohydrogenpolysiloxane in which the number of silicon atoms (i.e., degree of polymerization) is about 2 to about 300, most preferably about 4 to about 150 per molecule and which is liquid at room temperature (25°C). The silicon-bonded hydrogen atom may be present at the end of the molecular chain and/or at a position midway the molecular chain (i.e., at a non-terminal position of the molecular chain).

Examples of the organohydrogenpolysiloxane (C) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane/dimethylsiloxane cyclic copolymers, trimethylsiloxy-endcapped methylhydrogenpolysiloxane, trimethylsiloxy-endcapped dimethylsiloxane/methylhydrogensiloxane copolymers, dimethylhydrogensiloxy-endcapped dimethylpolysiloxane, dimethylhydrogensiloxy-endcapped dimethylsiloxane/methylhydrogensiloxane copolymers, trimethylsiloxy-endcapped methylhydrogensiloxane/diphenyl siloxane copolymers, trimethylsiloxy-endcapped methylhydrogensiloxane/diphenylsiloxane/dimethylsiloxane copolymers, trimethylsiloxy-endcapped methylhydrogensiloxane/methylphenylsiloxane/dimethylsiloxane copolymers, dimethylhydrogensiloxy-endcapped methylhydrogensiloxane/-dimethylsiloxane/diphenylsiloxane copolymers, dimethylhydrogensiloxy-endcapped methylhydrogensiloxane/-dimethylsiloxane/methylphenylsiloxane copolymers, copolymers consisting of (CH₃)₂HSiO_{1/2}) units, CH₃)₃HSiO_{1/2} units and SiO_{4/2} units, copolymers consisting of (CH₃)₂HSiO_{1/2} units and SiO_{4/2} units, copolymers consisting of CH₃)₂HSiO_{1/2} units, SiO_{4/2} units and (C₆H₅)₃SiO_{1/2} units, and substituted forms of the foregoing in which some or all methyl radicals are substituted by other alkyl radicals (e.g., ethyl) or phenyl radicals. It is noted that the term "endcapped" means that a siloxane is capped at both ends of the molecular chain with the referenced radicals, unless otherwise stated.

The organohydrogenpolysiloxane as component (C) is added in an amount of 0.2 to 20 parts, preferably 0.3 to 10 parts by weight per 100 parts by weight of components (A) and (B) combined. If the amount of component (C) added is too small, crosslinking may be insufficient and a tacky or greasy rubber may form. Too much amounts of component (C) may result in a molded part which contains bubbles or is difficult to remove from the mold. Differently stated, for the same reason as above, component (C) is added in such an amount that the molar ratio (SiH/alkenyl) of silicon-bonded hydrogens (or SiH) in organohydrogenpolysiloxane as component (C) to total silicon-bonded alkenyl radicals (i.e., alkenyl radicals terminated with an unsaturated double bond: CH₂=CH-) in component (A) and optionally component (B) may be 0.8/1 to 10.0/1, specifically 1.0/1 to 5.0/1.

Component (D) is reinforcing silica which is added to provide a silicone rubber composition with enhanced mechanical strength. To this end, silica should have a specific surface area of at least 50 m²/g, preferably 100 to 450 m²/g, and more preferably 100 to 350 m²/g, as measured by the BET adsorption method. Silica with a surface area of less than 50 m²/g may provide insufficient hardness and degrade the transparency of molded parts whereas silica with a surface area in excess of 450 m²/g may interfere with compounding operation.

Examples of the reinforcing silica include fumed silica and precipitated silica (or wet silica). While the silica may be used as such, it is preferably pre-treated with surface hydrophobizing agent prior to use or treated by adding surface treating agent during kneading with component (A). The surface treating agent used herein may be selected from well-known agents including alkylalkoxysilanes, alkylchlorosilanes, alkylsilazanes, silane coupling agents, titanate-based treating agents and fatty acid esters. Two or more agents may be used at a time or different times.

The reinforcing silica as component (D) is added in an amount of 10 to 100 parts, preferably 10 to 50 parts by weight per 100 parts by weight of components (A) and (B) combined. Outside the range, less amounts of component (D) added may achieve insufficient reinforcing effect whereas too much amounts of component (D) may adversely affect processability, mechanical strength, and dynamic fatigue durability.

Component (E) is an addition reaction catalyst. Suitable catalysts include platinum-based catalysts such as platinum black, platinic chlorides, chloroplatinic acid, the reaction product of chloroplatinic acid with monohydric alcohol, chloroplatinic acid-olefin complexes, and platinum bisacetoacetate and platinum group metal catalysts such as palladium and rhodium-based catalysts. The catalyst may be used in a catalytic amount, which is typically about 0.5 to about 1,000 ppm, specifically about 1 to about 500 ppm of platinum group metal based on the total weight of components (A) and (B).

Other components may be compounded in the composition, if necessary. Included are fillers such as quartz powder, diatomaceous earth and calcium carbonate, conductive agents such as carbon black, conductive zinc oxide and metal powder, hydrosilylation inhibitors such as nitrogen-containing compounds, acetylene compounds, phosphorus compounds, nitrile compounds, carboxylates, tin compounds, mercury compounds and sulfur compounds, heat resistance enhancers such as iron oxide and cerium oxide, internal mold release agents such as dimethylsilicone oil, adhesion promoters, and thixotropic agents.

The silicone rubber composition may be prepared by mixing the above components. The composition is preferably liquid at room temperature (25°C±10°C). Specifically it has a viscosity at 25°C of 50 to 5,000 Pa-s, more specifically 100 to 3,000 Pa-s. Notably, the viscosity may be measured by a rotational viscometer, for example, BL, BH, BS or cone-plate type viscometer.

The silicone rubber composition may be molded and cured in accordance with standard methods. Advantageously the liquid injection molding method is used. For curing, heat treatment (or primary cure) may be carried out at 120 to 230°C for about 3 seconds to about 10 minutes, preferably at 150 to 210°C for about 5 seconds to about 3 minutes. Optionally, the cured composition may be post-cured (or secondary cure) at 150 to 220°C, specifically 180 to 210°C for about 1 to about 4 hours, specifically about 1 to about 2 hours.

### EXAMPLE

Examples of the invention are given below by way of illustration and not by way of limitation. In Examples, all parts are by weight.

### Example 1

Liquid dimethylpolysiloxane (1) endcapped with dimethylvinylsiloxy and having an average degree of polymerization of 750, 70 parts, was mixed with 25 parts of fumed silica having a specific surface area of 300 m²/g (Aerosil 300, Nippon Aerosil Co., Ltd.), 5 parts of hexamethyldisilazane, and 1.0 part of water at room temperature for 30 minutes. The mixture was heated to 150°C, stirred for 3 hours, and cooled, yielding a silicone rubber base. To 95 parts of the silicone rubber base, 10 parts of the liquid dimethylpolysiloxane (1) and 2.5 parts of dimethylpolysiloxane gum (2) containing one cyclohexenylethyldimethylsiloxy radical introduced at each end of the molecular chain (i.e., two siloxy radicals per molecule) and having an average degree of polymerization of 6,000 were added, followed by stirring for 30 minutes. Then 1.5 parts of methylhydrogenpolysiloxane having SiH radicals at both ends of the molecular chain and midway the molecular chain (i.e., at a non-terminal position of the molecular chain) (degree of polymerization: 40, SiH content: 0.00725 mol/g) as a crosslinker and 0.05 part of ethynylcyclohexanol as a reaction inhibitor were added. The mixture was stirred for 15 minutes, yielding a silicone rubber composition having a viscosity of 200 Pa-s at 25°C as measured by a BS type viscometer with No. 7 rotor at 10 rpm.

The silicone rubber composition, 100 parts, was mixed with 0.1 part of platinum catalyst (Pt concentration 1 wt%) and press cured at 120°C for 10 minutes to form a primary cured test sheet. The cured sheet was post-cured in an oven at 150°C for 1 hour to form a secondary cured test sheet. The primary and secondary cured test sheets were measured for a coefficient of dynamic friction according to JIS K6249. The results are shown in Table 1.

### Example 2

Test sheets were prepared by the same procedure as in Example 1 except that the amount of gum (2) was changed to 1.0 part. They were measured for a coefficient of friction, with the results shown in Table 1.

### Example 3

Test sheets were prepared by the same procedure as in Example 1 except that the amount of gum (2) was changed to 5.0 parts. They were measured for a coefficient of friction, with the results shown in Table 1.

### Example 4

Test sheets were prepared by the same procedure as in Example 1 except that 2.5 parts of dimethylpolysiloxane gum (3) containing one cyclohexenylethyl radical at each end of the molecular chain and on average two cyclohexenylethyl radicals midway the molecular chain (at non-terminal positions of the molecular chain) and having an average degree of polymerization of 8,000 was added instead of gum (2). They were measured for a coefficient of friction, with the results shown in Table 1.

### Example 5

Test sheets were prepared by the same procedure as in Example 4 except that the amount of gum (3) was changed to 5.0 parts. They were measured for a coefficient of friction, with the results shown in Table 1.

### Example 6

Test sheets were prepared by the same procedure as in Example 4 except that the amount of gum (3) was changed to 10.0 parts. They were measured for a coefficient of friction, with the results shown in Table 1.

### Comparative Example 1

Test sheets were prepared by the same procedure as in Example 1 except that 5.0 parts of dimethylpolysiloxane gum (4) endcapped with dimethylvinylsiloxy and having an average degree of polymerization of 8,000 (vinyl content: 2.5×10⁻⁶ mol/g) was added instead of gum (2). They were measured for a coefficient of friction, with the results shown in Table 2.

### Comparative Example 2

Test sheets were prepared by the same procedure as in Example 1 except that 5.0 parts of liquid dimethylpolysiloxane (5) endcapped with dimethylvinylsiloxy and having a viscosity of 60,000 mPa-s at 25°C as measured by a rotational viscometer was added instead of gum (2). They were measured for a coefficient of friction, with the results shown in Table 2.

### Comparative Example 3

Test sheets were prepared by the same procedure as in Example 1 except that 5.0 parts of liquid dimethylpolysiloxane (6) endcapped with dimethylvinylsiloxy and having a viscosity of 1,000 mPa-s at 25°C as measured by a rotational viscometer was added instead of gum (2). They were measured for a coefficient of friction, with the results shown in Table 2.

### Comparative Example 4

Test sheets were prepared by the same procedure as in Example 1 except that gum (2) was omitted. They were measured for a coefficient of friction, with the results shown in Table 2.

**Table 1**

| Coefficient of dynamic friction, µ_{D} | Example | | | | | |
|---|---|---|---|---|---|---|
| | 1 | 2 | 3 | 4 | 5 | 6 |
| Primary cured | 0.66 | 0.93 | 0.58 | 0.60 | 0.51 | 0.51 |
| Post-cured (150°C/1 hr) | 0.62 | 0.70 | 0.42 | 0.63 | 0.52 | 0.40 |

**Table 2**

| Coefficient of dynamic friction, µ_{D} | Comparative Example | | | |
|---|---|---|---|---|
| | 1 | 2 | 3 | 4 |
| Primary cured | 0.74 | 0.65 | 0.88 | 1.05 |
| Post-cured (150°C/1 hr) | 0.81 | 0.86 | 1.06 | 1.31 |

### Example 7

Using a kneader, 100 parts of linear organopolysiloxane gum (7) consisting of 99.850 mol% of dimethylsiloxane units and 0.125 mol% of methylvinylsiloxane units as diorganosiloxane units of the backbone and 0.025 mol% of dimethylvinylsiloxy as end radicals of the molecular chain and having an average degree of polymerization of about 6,000, 35 parts of fumed silica having a BET specific surface area of 200 m²/g (Aerosil 200, Nippon Aerosil Co., Ltd.), 6 parts of silanol-endcapped dimethylpolysiloxane having an average degree of polymerization of 3.5 as a dispersant, and 0.1 part of hexamethyldisilazane were milled. These components were compounded at room temperature (21°C) without heat treatment.

To 100 parts of the compound was added 2.5 parts of dimethylpolysiloxane gum (8) capped with trimethylsiloxy at both ends of the molecular chain, containing, on average per molecule, one silicon-bonded cyclohexenylethyl midway the molecular chain (i.e., as a substituent on a silicon atom in diorganosiloxane unit at a non-terminal position of the backbone), and having an average degree of polymerization of 6,000. They were mixed until uniform. The composition was press cured at 70 kgf/m² and 120° C for 10 minutes to form a primary cured test sheet. The cured sheet was post-cured at 150°C for 1 hour to form a secondary cured test sheet. The primary and secondary cured test sheets were measured for a coefficient of dynamic friction. The results are shown in Table 3.

### Comparative Example 5

Test sheets were prepared by the same procedure as in Example 7 except that 2.5 parts of dimethylpolysiloxane gum (9) capped with trimethylsiloxy at both ends of the molecular chain and having an average degree of polymerization of 6,000 was added instead of gum (8). They were measured for a coefficient of friction, with the results shown in Table 3.

### Comparative Example 6

Test sheets were prepared by the same procedure as in Example 7 except that 5.0 parts of dimethylpolysiloxane gum (9) capped with trimethylsiloxy at both ends of the molecular chain and having an average degree of polymerization of 6,000 was added instead of gum (8). They were measured for a coefficient of friction, with the results shown in Table 3.

**Table 3**

| Coefficient of dynamic friction, µ_{D} | Example | Comparative Example | |
|---|---|---|---|
| | 7 | 5 | 6 |
| Primary cured | 0.83 | 0.62 | 0.77 |
| Post-cured (150°C/1 hr) | 0.75 | 0.91 | 0.99 |

## Claims

1. An addition-curable silicone rubber composition comprising:
(A) 100 parts by weight of a cyclohexenylalkyl-free organopolysiloxane having at least two silicon-bonded alkenyl radicals each terminated with an unsaturated double bond: CH₂=CH- per molecule, represented by the average compositional formula (I):
R¹ₐSiO_{(4-a)/2} (I)
wherein R¹ is each independently a substituted or unsubstituted monovalent hydrocarbon radical of 1 to 10 carbon atoms, and a is a positive number of 1.5 to 2.8,
(B) 1 to 50 parts by weight of an organopolysiloxane containing at least one silicon-bonded cyclohexenylalkyl radical per molecule and having an average degree of polymerization of at least 1,000,
(C) an organohydrogenpolysiloxane having at least two silicon-bonded hydrogen atoms per molecule, in an amount of 0.2 to 20 parts by weight per 100 parts by weight of components (A) and (B) combined,
(D) reinforcing silica having a specific surface area of at least 50 m²/g as measured by the BET method, in an amount of 10 to 100 parts by weight per 100 parts by weight of components (A) and (B) combined, and
(E) a catalytic amount of an addition reaction catalyst.

2. The composition of claim 1, which has a viscosity of 50 to 5,000 Pa-s at 25°C and is used in liquid injection molding.

## Patentansprüche

1. Additionshärtbare Silikonkautschukzusammensetzung, umfassend:
(A) 100 Gewichtsteile eines cyclohexenylalkyl-freien Organopolysiloxans mit mindestens zwei Silizium-gebundenen Alkenylresten, die jeweils mit einer ungesättigten Doppelbindung terminiert sind: CH₂=CH- pro Molekül, wiedergegeben durch die durchschnittliche Zusammensetzungsformel (I):
R¹ₐSiO(_{4-a)/2} (I)
worin R¹ jeweils unabhängig ein substituierter oder unsubstituierter, einwertiger Kohlenwasserstoffrest mit 1 bis 10 Kohlenstoffatomen ist, und a eine positive Zahl von 1,5 bis 2,8 ist,
(B) 1 bis 50 Gewichtsteile eines Organopolysiloxans, enthaltend mindestens einen Silizium-gebundenen Cyclohexenylalkylrest pro Molekül und das einen durchschnittlichen Polymerisationsgrad von mindestens 1000 besitzt,
(C) ein Organohydrogenpolysiloxan mit mindestens zwei Silizium-gebundenen Wasserstoffatomen pro Molekül, in einer Menge von 0,2 bis 20 Gewichtsteilen pro 100 Gewichtsteilen der kombinierten Komponenten (A) und (B),
(D) verstärkendes Silica mit einer spezifischen Oberfläche von mindestens 50 m²/g, gemessen durch die BET-Methode, in einer Menge von 10 bis 100 Gewichtsteilen pro 100 Gewichtsteilen der kombinierten Komponenten (A) und (B), und
(E) eine katalytische Menge eines Additionsreaktionskatalysators.

2. Zusammensetzung nach Anspruch 1, welcher eine Viskosität von 50 bis 5000 Pa-s bei 25 °C besitzt und beim Flüssig-Spritzguss verwendet wird.

## Revendications

1. Composition de caoutchouc de silicone durcissable par addition comprenant :
(A) 100 parties en poids d'un organopolysiloxane exempt de radicaux cyclohexénylalkyle ayant au moins deux radicaux alcényle liés à un atome de silicium, chacun se terminant par une double liaison insaturée CH₂=CH- par molécule, représenté par la formule développée (I) :
R¹ₐSiO_{(4-a)/2} (I)
dans laquelle R¹ est indépendamment un radical hydrocarboné monovalent substitué ou non substitué de 1 à 10 atomes de carbone, et a est un nombre positif de 1,5 à 2,8,
(B) de 1 à 50 parties en poids d'un organopolysiloxane contenant au moins un radical cyclohexénylalkyle lié à un atome de silicium par molécule et ayant un degré de polymérisation moyen d'au moins 1000,
(C) un organohydrogénopolysiloxane ayant au moins deux atomes d'hydrogène liés à un atome de silicium par molécule, en une quantité de 0,2 à 20 parties en poids pour 100 parties en poids des composants (A) et (B) combinés,
(D) une silice de renforcement ayant une surface spécifique d'au moins 50 m²/g mesurée par la méthode BET, en une quantité de 10 à 100 parties en poids pour 100 parties en poids des composants (A) et (B) combinés,
(D) une quantité catalytique d'un catalyseur de réaction d'addition.

2. Composition selon la revendication 1, qui a une viscosité de 50 à 5000 Pa.s à 25 °C et est utilisée dans un moulage par injection de liquide.
